# EUROPEAN PATENT APPLICATION

(11) **EP 3 633 784 A1**
(43) Date of publication of application: **08.04.2020**
(21) Application number: 18805985.1
(22) Date of filing: 22.05.2018
(51) Int. Cl.: H01M 10/48, H01M 4/48, H01M 10/052, H02J 7/00

(54) **ELECTRICITY STORAGE UNIT AND ELECTRICITY STORAGE SYSTEM**

(30) Priority: 25.05.2017 JP 2017103887
(71) Applicant: Kabushiki Kaisha Toshiba, Minato-ku Tokyo 105-0023 (JP); Toshiba Materials Co., Ltd., Yokohama-shi, Kanagawa 235-0032 (JP)
(72) Inventor: TAKAGI, Shigeyuki, Hachioji-shi Tokyo 192-0982 (JP); FUKUSHI, Daisuke, Yokohama-shi Kanagawa 235-0032 (JP); HIRABAYASHI, Hideaki, Yokohama-shi Kanagawa 235-0032 (JP); KATAOKA, Yoshinori, Yokohama-shi Kanagawa 235-0032 (JP); SASAKI, Akito, Yokohama-shi Kanagawa 235-0032 (JP); SASAKI, Atsuya, Yokohama-shi Kanagawa 235-0032 (JP)
(74) Representative: Henkel & Partner mbB
(86) International application number: PCT/JP2018/019669
(87) International publication number: WO 2018/216692

(57) **Abstract**

An electricity storage unit includes an electricity storage that uses tungsten oxide for a negative electrode layer or a positive electrode layer, a main crystal of the tungsten oxide being at least one of monoclinic crystal, orthorhombic crystal, and cubic crystal, and a control circuit that controls, in charge and discharge of the electricity storage, an electric potential difference per cell in the electricity storage in a manner such that a type of a crystal structure as the main crystal of the tungsten oxide is maintained from an initial state. Further, in an electricity storage system, this electricity storage unit and a secondary battery are combined.

## Description

### FIELD

Embodiments described herein relate to an electricity storage unit and an electricity storage system using the electricity storage unit.

### BACKGROUND

Secondary batteries are widely used from the viewpoint of energy saving and effective use of electric energy. A secondary battery is a chargeable and dischargeable battery. Utilization examples of a secondary battery include effective use of regenerative energy for an electric automobile.

For example, Japanese Patent No. 3716776 (Patent Literature 1) discloses an electric power supply system in which a lead storage battery and a lithium secondary battery are combined. The electric power supply system of Patent Document 1 charges the lithium secondary battery with regenerative energy and charges the lead storage battery from the lithium secondary battery when charge and discharge are halted between the lithium secondary battery and a generator of the regenerative energy. In this manner, regenerative energy is efficiently recovered.

On the other hand, with the recent spread of electric automobiles, more efficient utilization of regenerative energy has been demanded. Regenerative energy is charged as electric energy when an automobile is decelerated. Electricity stored in the electricity storage system is used when an automobile is started (accelerated). The rapid start or rapid deceleration of an automobile requires an electricity storage system that enables rapid charge and discharge. However, sufficient rapid charge and discharge has not always been performed under existing electricity storage systems (electric power supply systems).

In order to realize an electricity storage system that enables rapid charge and discharge, International Publication No. 2016/039157 (Patent Literature 2) proposes the usage of a tungsten oxide powder exhibiting hopping conduction characteristics as an electrode material (an active material).

### CITATION LIST

### PATENT LITERATURE

Patent Literature 1: Japanese Patent No. 3716776
Patent Literature 2: International Publication No. 2016/039157

### SUMMARY

### TECHNICAL PROBLEM

In Patent Literature 2, oxygen deficiency is generated in tungsten oxide. The tungsten oxide is provided with hopping conduction characteristics by having a predetermined amount of oxygen deficiency. This enhances the electron conduction of tungsten oxide as an electrode material, thereby realizing efficient delivery of ions and electrons. The use of the electrode material of Patent Literature 2 realizes an electricity storage system that enables rapid charge and discharge. However, there has been a demand for further improvement in performance with respect to rapid charge and discharge.

### SOLUTION TO PROBLEM

Problems to be solved by this invention are to provide an electricity storage unit which includes that: an electricity storage that uses tungsten oxide for a negative electrode layer or a positive electrode layer, a main crystal of the tungsten oxide being at least one of monoclinic crystal, orthorhombic crystal, and cubic crystal; and a control circuit that controls, in charge and discharge of the electricity storage, an electric potential difference per cell in the electricity storage in a manner such that a type of a crystal structure as the main crystal of the tungsten oxide is maintained from an initial state. Further, the problems are to provide an electricity storage system in which this electricity storage unit and a secondary battery are combined.

According to the above electricity storage unit and electricity storage system, an electricity storage unit, in which rapid charge and discharge characteristics are improved, and an electricity storage system, in which this electricity storage unit is used, can be provided.

### BRIEF DESCRIPTION OF THE DRAWINGS

FIG. 1 is a circuit diagram showing the concept of an electricity storage unit and an electricity storage system according to an embodiment.
FIG. 2 is a schematic view showing results of XRD analysis according to sample 1.
FIG. 3 is a schematic view showing an example of a charge and discharge curve exhibited by one cell in an electricity storage according to the embodiment.
FIG. 4 is a circuit diagram as a different example from that of FIG. 1 showing the concept of the electricity storage unit and the electricity storage system according to the embodiment.
FIG. 5 is a circuit diagram as a different example from those of FIGS. 1 and 4 showing the concept of the electricity storage unit and the electricity storage system according to the embodiment.
FIG. 6 is a circuit diagram schematically showing an example in which a step-down chopper is incorporated in a voltage adjustment circuit according to the embodiment.
FIG. 7 is a circuit diagram schematically showing an example in which a step-up chopper is incorporated in the voltage adjustment circuit according to the embodiment.
FIG. 8 is a circuit diagram schematically showing an example in which a step-up and step-down chopper is incorporated in the voltage adjustment circuit according to the embodiment.
FIG. 9A is a schematic diagram showing an example of a duty ratio of a first switching element in the circuit shown in FIG. 5.
FIG. 9B is a schematic diagram showing an example of a duty ratio of a second switching element in the circuit shown in FIG. 5.
FIG. 10 is a schematic view showing an example of a cell structure in the electricity storage according to the embodiment.

### DETAILED DESCRIPTION

An electricity storage unit and an electricity storage system according to an embodiment includes an electricity storage that uses tungsten oxide for a negative electrode layer or a positive electrode layer, and a control circuit that controls, at the time of charge and discharge of the electricity storage, an electric potential difference between the negative electrode and the positive electrode per cell (per unit battery) in the electricity storage in a manner such that a type of a crystal structure as the main crystal of tungsten oxide can be maintained from an initial state.

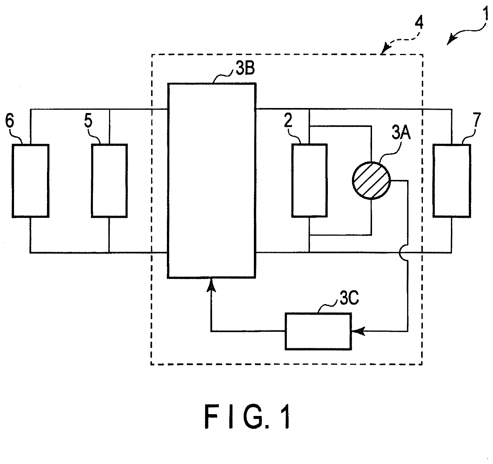

FIG. 1 is a circuit diagram showing the concept of an electricity storage unit and an electricity storage system (hybrid electricity storage system) according to the embodiment. In FIG. 1, numeral 1 denotes an electricity storage system, numeral 2 denotes an electricity storage (accumulator), numeral 3A denotes a voltage detection circuit (electric potential difference detection circuit), numeral 3B denotes a voltage adjustment circuit (electric potential difference adjustment circuit), numeral 3C denotes a control circuit, numeral 4 denotes an electricity storage unit, numeral 5 denotes a secondary battery, and numeral 6 denotes an electricity generation source.

The electricity storage unit 4 includes the electricity storage 2, the voltage detection circuit 3A, the voltage adjustment circuit 3B, and the control circuit 3C. The electricity storage system 1 includes the electricity storage unit 4 and the secondary battery 5. The electricity storage system 1 may further include the electricity generation source 6.

First, the electricity storage 2 uses tungsten oxide as an active material for a negative electrode layer (a layer containing a negative electrode active material) or a positive electrode layer (a layer containing a positive electrode active material). Tungsten oxide in an electrode layer (a layer containing an active material) may be in the form of a powder, thin film, etc. Tungsten oxide is preferably in the form of a powder for the sake of increased surface area. In the electrode layer (the layer containing an active material), tungsten oxide may be mixed with other materials.

Tungsten oxide is preferably based on tungsten trioxide (WO₃). Preferably, an electrolytic solution that contains Li ions is used for the electricity storage 2. In this manner, LiₐWO₃ in which a ≤ 1 can be formed in the negative electrode layer (the layer containing a negative electrode active material) or the positive electrode layer (the layer containing a positive electrode active material). Rapid charge and discharge is realized by quickly inserting and removing Li ions. The electricity storage 2 may be formed of only one cell (one unit battery), or may be formed by connecting a plurality of cells (a plurality of unit batteries) through at least one of series-connection and parallel-connection.

When the electricity storage 2 is charged and discharged, LiₐWO₃ within the range of 0.1 ≤ a ≤ 0.5 can be obtained by controlling an electric potential difference between the negative electrode and the positive electrode per cell (per unit battery) to be within the range of 1.5 V or more and 2.8 V or less. When the a-value (value of a) is less than 0.1, the amount of Li ions is too small to improve the electricity storage capacity of the electricity storage 2. On the other hand, when the a-value is more than 0.5, the amount of incorporated Li ions is so large that the take-out speed of Li ions tends to be low. When the take-out speed of Li ions is lowered, the rapid charge and discharge performance is degraded. The electricity storage capacity changes depending on the energy density (Wh/kg) of the electricity storage 2. The rapid charge and discharge performance changes depending on the power density (W/kg) of the electricity storage 2.

An electric potential difference between the negative electrode and the positive electrode per cell at the time of charging and discharging the electricity storage 2 is controlled to be within preferably the range of 1.5 V or more and 2.8 V or less, more preferably in the range of 2.0 V or more and 2.5 V or less. By controlling an electric potential difference between the negative electrode and the positive electrode per cell at the time of charging and discharging the electricity storage 2 to be within the range of 2.0 V or more and 2.5 V or less, LiₐWO₃ within the range of 0. 2 ≤ a ≤ 0.5 can be obtained. The a-value can be measured by X-ray diffraction (XRD).

Tungsten oxide preferably contains WO₃₋ₓ in which x ≥ 0. In such a case, it is more preferable that tungsten oxide contains WO₃₋ₓ in which 0.4 ≥ x > 0.

A KMnO₄ solution is used to measure the amount of oxygen deficiency in tungsten oxide. To measure the amount of oxygen deficiency, the amount of KMnO₄ required to oxidize all the low-electrified W ions (W⁴⁺, W⁵⁺) to W⁶⁺ is quantified by chemical analysis. According to this analysis, the quantified amount of KMnO₄ can be replaced with WO₃₋ₓ to obtain the x-value (value of x). If this x-value is more than 0, it is determined that there is oxygen deficiency.

Tungsten trioxide (WO₃) can take various crystal structures such as monoclinic crystal, triclinic crystal, cubic crystal, hexagonal crystal, orthorhombic crystal, etc. The ease of incorporating Li ions depends on a crystal structure of WO₃. A crystal structure of LiₐWO₃₋ that has taken in Li ions is one of monoclinic crystal, triclinic crystal, and cubic crystal, or a mixture of two or more thereof.

A crystal structure of tungsten oxide changes depending on the uptake amount of Li ions. For example, based on the comparison made at the time of charging, in the absence of oxygen deficiency (x = 0), monoclinic crystal becomes the main crystal (main component) of LiₐWO₃₋ₓ if the a-value is 0.078 or less. When the a-value is more than 0.078 and less than 0.21, triclinic crystal becomes the main crystal. When the a-value is 0.21 or more, cubic crystal becomes the main crystal. As the a-value increases, the uptake amount of Li ions increases. Accordingly, a cubic crystal structure increases the uptake amount of Li ions, thereby resulting in the increased electricity storage amount.

That is, in tungsten oxide, crystal-structure change occurs with the increase in uptake amount of Li ions. With the increase in uptake amount of Li ions, a main crystal changes from monoclinic crystal through triclinic crystal to cubic crystal in this order. However, a frequent occurrence of crystal-structure change causes a decrease in durability of tungsten oxide. The main crystal is a crystal structure that accounts for the largest percentage of tungsten oxide. A crystal structure as the main crystal accounts for preferably 50% or more of tungsten oxide.

For example, when oxygen deficiency is generated to obtain WO_{2.72}, tungsten oxide is stabilized with a monoclinic crystal. Furthermore, when the a-value falls within the range of 0 or more and 0.7 or less, LiₐWO_{2.72} can be stabilized with a monoclinic crystal serving as the main crystal. Therefore, by controlling an electric potential difference in LiₐWO_{2.72}, the a-value can be set within the range of 0 or more and 0.7 or less while maintaining a monoclinic crystal as the main crystal.

Generation of oxygen deficiency increases the uptake amount of Li ions per mole in terms of WO₃₋ₓ. This improves the electricity storage capacity of the electricity storage 2. A comparison of WO₃ with WO_{2.72} shows that, if the same a-value is applied, WO_{2.72} is improved in electricity storage capacity (mAh/g) by about 2% to 3%. Furthermore, generation of oxygen deficiency enables the electricity storage capacity to be improved without reducing the take-out speed of Li ions.

Crystal-structure change in tungsten oxide can be prevented by controlling an electric potential difference. A resistance value of tungsten oxide can be decreased by generating oxygen deficiency. This realizes high-speed charge and discharge. Furthermore, generation of oxygen deficiency enables monoclinic crystal to be maintained even if the uptake amount of Li ions is increased, so that tungsten oxide can maintain its state in which monoclinic crystal is the main crystal.

The presence or absence of crystal-structure change in tungsten oxide can be analyzed by XRD.

When oxygen deficiency is generated, the x-value is presented as x > 0. Generation of oxygen deficiency lowers resistance of tungsten oxide. This realizes high-speed charge and discharge of an electricity storage device (electricity storage 2).

With WO₃₋ₓ set within the range of 0.4 ≤ x > 0 and further, the range of 0.3 ≥ x ≥ 0.2, tungsten trioxide can have a crystal structure in which monoclinic crystal is the main crystal. Whether monoclinic crystal is a main component or not can be analyzed by XRD. The measurement method of XRD is performed as a Cu target (Cu-Kα), that is, with a wavelength of 1.5418 Å, and the measurement is peformed with tube voltage of 40 kV, tube current of 40 mA, scan speed of 2.0°/min, and a slit (RS) of 0.15 mm.

To identify a crystal structure of tungsten oxide, it is assumed that a PDF number in a Powder Diffraction File (PDF), which is an X-ray diffraction database edited by International Center for Diffraction Data (ICDD), is used.

For example, the main crystal of WO _{2.72} is monoclinic crystal. In WO_{2.72}, the peaks of the diffracted X-ray intensity are detected at diffraction angles (2θ) 23.491°, 23.791°, and 24.421°. A first peak (2θ) with the highest intensity is detected at 23.491°. Each of a second peak with the second highest intensity and a third peak (2θ) with the third highest intensity is detected at 23.791° or 24.421°. Herein, the first peak serves as a main peak. The PDF number of WO_{2.72} is PDF-00-036-0101.

The main crystal of WO₃ is cubic crystal. In WO₃, the first peak (2θ) is detected at 23.637° and the second peak (2θ) is detected at 33.640°.

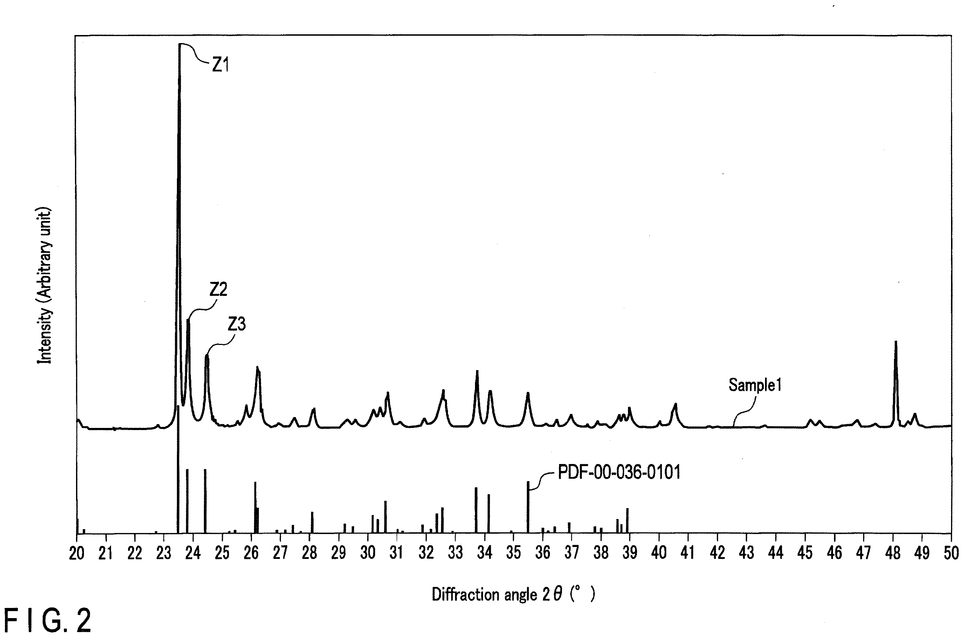

FIG. 2 shows the results of XRD analysis according to sample 1. Here, the sample 1 is WO_{2.72} having a particle diameter of 0.10 µm, and monoclinic crystal as its crystal structure. In addition, it is assumed that the XRD analysis of the sample 1 is performed under the conditions described above. In FIG. 2, the abscissa axis represents the diffraction angle (2θ) in units of "°", and the ordinate axis represents the intensity (relative intensity) of the diffracted X-rays in an arbitrary unit. Furthermore, FIG. 2 shows PDF-00-036-0101 in the aforementioned PDF in addition to the analysis results of sample 1. As shown in FIG. 2, in the analysis of the sample 1, each of the first peak Z1, the second peak Z2, and the third peak Z3 described above is detected. As shown in FIG. 2, the analysis of the sample 1 assumes that peaks other than the first to third peaks Z1 to Z3 may be detected.

When tungsten oxide has a plurality of crystal structures, a comparison in maximum peak is made between the crystal structures. As a result of comparison, a crystal structure having the largest maximum peak is deemed as the main crystal. For example, if monoclinic crystal and cubic crystal are mixed in tungsten oxide, the first peak of monoclinic crystal is compared with the first peak of cubic crystal. Then, the crystal structure with the larger peak intensity ratio is determined to be the main crystal.

In addition, as a way to adjust the x-value in WO₃₋ₓ, generating oxygen deficiency is preferable. Oxygen deficiency is effectively generated by heat-treating WO₃ in a non-oxidizing atmosphere when, for example, a negative electrode layer or a positive electrode layer is formed. The non-oxidizing atmosphere includes an inert atmosphere such as nitrogen gas and a reducing atmosphere such as hydrogen gas.

As described above, crystal-structure change can be suppressed by controlling an electric potential difference between the negative electrode and the positive electrode per cell (each unit cell) when the electricity storage 2 is charged and discharged. This is because the uptake amount of Li ions can be stabilized by setting an electric potential difference within a certain range. That is, the a-value in LiₐWO₃₋ₓ can be controlled by setting an electric potential difference within a certain range. Furthermore, generation of oxygen deficiency realizes high-speed charge and discharge. Oxygen deficiency increased in amount promotes stabilization of tungsten oxide in the presence of monoclinic crystal. Controlling an electric potential difference per cell enables LiₐWO₃₋ₓ to maintain its state in which monoclinic crystal is the main crystal. By setting the amount of oxygen deficiency to an appropriate value, the ease of taking in and out Li ions can be improved.

Furthermore, an electric potential difference between the negative electrode and the positive electrode per cell at the time of charging and discharging the electricity storage 2 is controlled to be within the range of 1.5 V or more and 2.8 V or less so that tungsten oxide (WO₃₋ₓ) can maintain its initial state without causing a crystal-structure change. Therefore, an electric potential difference per cell is controlled in a manner such that a type of a crystal structure as the main crystal of tungsten oxide is maintained from an initial state. In particular, if monoclinic crystal is the main crystal in an initial state, tungsten oxide can maintain this state in which monoclinic crystal is the main crystal. Herein, the initial state indicates a state at the time when or immediately after the first charge and discharge is started in the electricity storage system 1.

In the electricity storage 2, the energy density per cell can be set to 10 Wh/kg or more and the power density per cell can be set to 1,000 W/kg or more. By optimizing an electric potential difference per cell or the x-value, the energy density per cell can be set to 100 Wh/kg or more, and the power density per cell can be set to 5,000 W/kg or more.

Herein, control of an electric potential difference per cell will be described. Control of an electric potential difference here indicates controlling an electric potential difference when SOC of the electricity storage 2 (each cell) falls within the range of 0% or more and 100% or less. Herein, SOC is an abbreviation of State of Charge, and indicates a charge depth. SOC = 0% indicates a state with no electricity storage capacity. SOC = 100% indicates a fully charged state.

For a unit cell (unit battery) of the electricity storage 2, the power density per unit weight, i.e., weight power density P(W/kg) is determined by P(W/kg) = (V₁² - V₂²)/4RM. Herein, V₁ represents discharge start voltage (V). V₂ represents discharge end voltage (V). R represents an internal resistance (Ω). M represents a cell weight (kg).

For a unit cell, energy density E(Wh/kg) per unit weight is determined by E(Wh/kg) = (Ah × Vave)/M. Herein, Ah represents the discharge capacity (Ah) at 0.2 C rate. Vave represents the discharge average voltage. M represents the cell weight (kg). Rate (C) assumes that one rate (one unit) corresponds to the amount of electricity that reaches theoretical capacity by one hour.

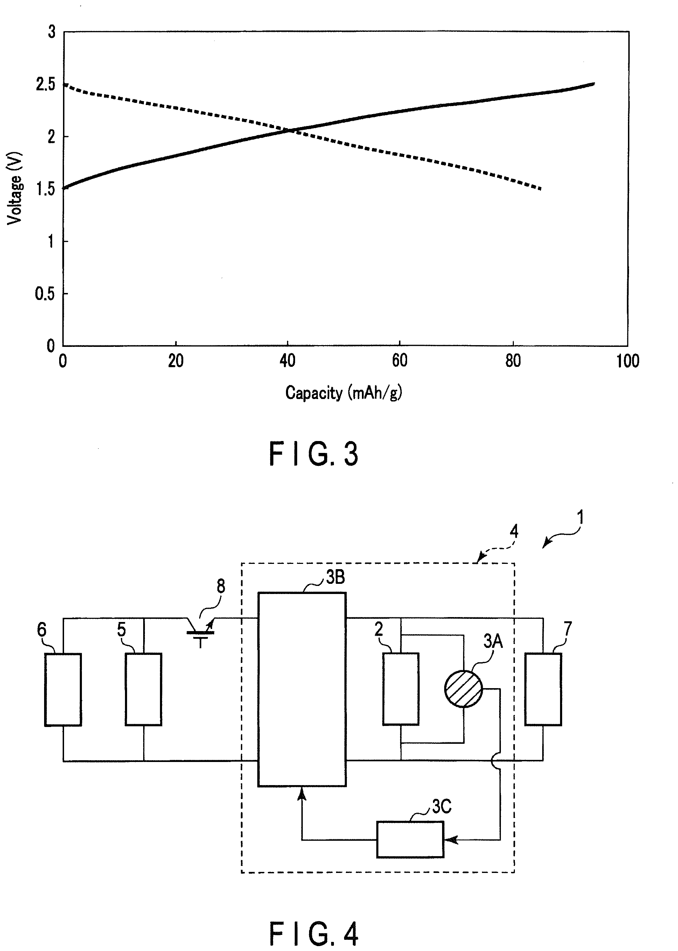

Herein, an example of a charge and discharge curve exhibited by one cell in the electricity storage 2 is illustrated in FIG. 3. The example shown in FIG. 3 is a charge and discharge curve according to Example 9 described later. In Example 9, as described later, an electric potential difference of one cell is controlled to be within the range of 1.5 V or more and 2.5 V or less, and the aforementioned sample 1 is used as tungsten oxide for the negative electrode layer. In FIG. 3, the abscissa axis represents the capacity in units of "mAh/g", and the ordinate axis represents the voltage (electric potential difference) between the negative electrode and the positive electrode in units of "V". In FIG. 3, a continuous line represents change in voltage during charge, and a broken line represents change in voltage during discharge. In Example 9 shown in FIG. 3, the electricity storage capacity per cell, that is, SOC = 100% is set to 100 mAh/g.

If necessary, a material other than tungsten oxide (WO₃₋ₓ) may be added to each electrode layer (layer containing an active material) of each unit cell in the electricity storage 2. Examples of a material other than tungsten oxide include one type or two or more types selected from metal oxide (metal oxide other than tungsten oxide) and carbon. Examples of metal oxides other than tungsten oxide include molybdenum oxide, titanium oxide, niobium oxide, indium-tin-oxide (ITO), etc. The additive amount of those materials is preferably 50 mass% or less in a unit cell in the electricity storage 2. Furthermore, since those materials have lower resistance than tungsten oxide, they produce the effect of lowering the internal resistance of the electricity storage 2.

The electricity storage unit 4 further includes the electricity storage 2, the voltage detection circuit 3A, the voltage adjustment circuit 3B, and the control circuit 3C. The voltage detection circuit 3A is connected in parallel to the electricity storage 2. The voltage detection circuit (electric potential difference detection circuit) 3A measures an electric potential difference between the positive electrode and the negative electrode per cell when the electricity storage 2 is charged and discharged. The voltage detection circuit 3A may detect the voltage applied to the entire electricity storage 2. That is, the voltage detection circuit 3A incorporates a voltage measurement function.

The voltage adjustment circuit 3B is provided between the electricity generation source 6 and the electricity storage 2. The control circuit 3C acquires the detection result of voltage by the voltage detection circuit 3A. The control circuit 3C then controls the driving of the voltage adjustment circuit 3B based on the acquired detection result by the voltage detection circuit 3A. The voltage applied to the electricity storage 2 is adjusted by controlling the driving of the voltage adjustment circuit 3B, so that an electric potential difference per cell in the electricity storage 2 is adjusted. The control circuit 3C includes a processor or an integrated circuit including a central processing unit (CPU), an application specific integrated circuit (ASIC) or a field programmable gate array (FPGA), and a storage medium such as a memory. The control circuit 3C controls the driving of the voltage adjustment circuit 3B by executing, e.g., a program stored in a storage medium. The control circuit 3C may be formed of one integrated circuit, etc., or may be formed of a plurality of integrated circuits, etc.

Furthermore, in one embodiment, a step-up and step-down chopper is incorporated in the voltage adjustment circuit 3B. In this case, the control circuit 3C can adjust the voltage supplied to the electricity storage 2 by controlling the switching duty in the step-up and step-down chopper. When the voltage of the electricity generation source 6 is low, the voltage of the electricity generation source 6 is raised and supplied to the electricity storage 2 to charge it. On the other hand, when the voltage of the electricity generation source 6 is high, the voltage of the electricity generation source 6 can be dropped in accordance with the rated voltage of the electricity storage 2 and then supplied to the electricity storage 2. The step-up and step-down chopper can raise or lower the voltage of a load 7 (voltage of the electricity storage 2) with respect to the output voltage of the electricity generation source 6. The step-up and step-down chopper may be replaced with a step-up chopper or a step-down chopper depending on a relationship between the electricity generation source 6 and the load 7 (the electricity storage 2). The step-up chopper raises the voltage of the load 7 (the electricity storage 2) with respect to the voltage of the electricity generation source 6. The step-down chopper lowers the voltage of the load 7 (the electricity storage 2) with respect to the voltage of the electricity generation source 6.

The electricity storage unit 4 in combination with the secondary battery 5 forms the electricity storage system (hybrid electricity storage system) 1. The electricity storage system (charge and discharge system) 1 may include the electricity storage unit 4, the secondary battery 5, and the electricity generation source 6. By providing the electricity storage unit 4 with the step-up and step-down chopper, the voltage of the load 7 (the electricity storage 2) can adjusted by raising and lowering it.

Examples of the secondary battery 5 include various types including a lithium ion secondary battery, a lead storage battery, an electric double layer capacitor (EDLC), etc. The secondary battery 5 preferably has an energy density of 10 Wh/kg or more per cell (per unit battery). The secondary battery 5 preferably obtains a necessary capacity by a plurality of cells (a plurality of unit batteries) connected in series. The secondary battery 5 is preferably smaller in power density (W/kg) per cell than the electricity storage 2. The speed of supplying electricity from the electricity storage 2 can be increased by making the secondary battery 5 smaller in power density than the electricity storage 2.

Examples of the electricity generation source 6 include an electricity generator that generates electricity, such as a commercial power source, a generator of regenerative energy, and a generator that generates electricity using renewable energy. Examples of the generator using renewable energy include a solar power generator and a wind power generator.

Operation of the electricity storage unit 4 and the electricity storage system 1 will be described with reference to FIG. 1. Electricity generated by the electricity generation source 6 is charged to both the electricity storage 2 and the secondary battery 5. To supply electricity to the load 7, electricity is discharged from the electricity storage 2 or the secondary battery 5. The electricity storage 2 is made larger in energy density than the secondary battery 5 so that the electricity storage 2 can be preferentially charged and discharged. As a result, the frequency of use of the electricity storage part 2 is increased. In the electricity storage system 1 according to the embodiment, the energy density is improved by controlling an electric potential difference per cell in the electricity storage 2. The improved energy density of the electricity storage 2 enables the electricity storage 2 to be preferentially charged and discharged. This decreases the rate at which the secondary battery 5 operates, so that the secondary battery 5 can be prevented from deteriorating.

The control circuit 3C controls an electric potential difference per cell in the electricity storage 2 and the amount of oxygen deficiency in tungsten oxide is adjusted at the time of manufacture, etc., so that the values of a and x in LiₐWO₃₋ₓ are set to a predetermined range. If the values of a and x change significantly at the time of charging and discharging the electricity storage 2, the performance of the electricity storage 2 may be degraded. In addition, the deterioration of the electricity storage 2 may be accelerated. The electricity storage system 1 according to the embodiment controls an electric potential difference between the positive electrode and the negative electrode per cell in the electricity storage 2 to be within a predetermined range so that the electricity storage 2 can have stable performance and prolonged life. This decreases the rate at which the secondary battery 5 operates, so that the life of the electricity storage system 1 can also be prolonged.

Furthermore, high-speed charge and discharge is realized by generating oxygen deficiency in the tungsten oxide provided in the negative electrode layer or the positive electrode layer in each cell of the electricity storage 2. Oxygen deficiency of the amount set within an appropriate range promotes tungsten oxide to be stabilized in the presence of monoclinic crystal and improves the ease of taking in and take out Li ions.

The electricity storage system 1 may be provided with a switching element that distributes electricity from the electricity generation source 6, between the electricity storage 2 and the secondary battery 5. FIG. 4 shows an example of a circuit diagram under the electricity storage system 1 provided with the switching element. In FIG. 4, numeral 1 denotes the electricity storage system (hybrid electricity storage system), numeral 2 denotes the electricity storage, numeral 3A denotes the voltage detection circuit, numeral 3B denotes the voltage adjustment circuit, numeral 3C denotes the control circuit, numeral 4 denotes the electricity storage unit, numeral 5 denotes the secondary battery, and numeral 6 denotes an electricity generation source, numeral 7 denotes the load, and numeral 8 denotes the switching element. The switching element 8 may be a power semiconductor device such as an insulated gate bipolar transistor (IGBT).

By providing the switching element 8, electricity from the electricity generation source 6 can be distributed to either the electricity storage 2 or the secondary battery 5. This enables electricity (electric power) to be distributed to one of the electricity storage 2 and the secondary battery 5, depending on which charging is desired. Furthermore, by providing the switching element 8, overcharging of the secondary battery 5 can be prevented, and heat generation of the secondary battery 5 can also be suppressed. With the switching element 8, the supply of electricity can be stopped so as to prevent both the electricity storage 2 and the secondary battery 5 from being overcharged. Furthermore, by using the electricity storage 2 and the secondary battery 5 in combination, electric power can be output from the electricity generation source 6 at the maximum output point at which the output electric power is maximized.

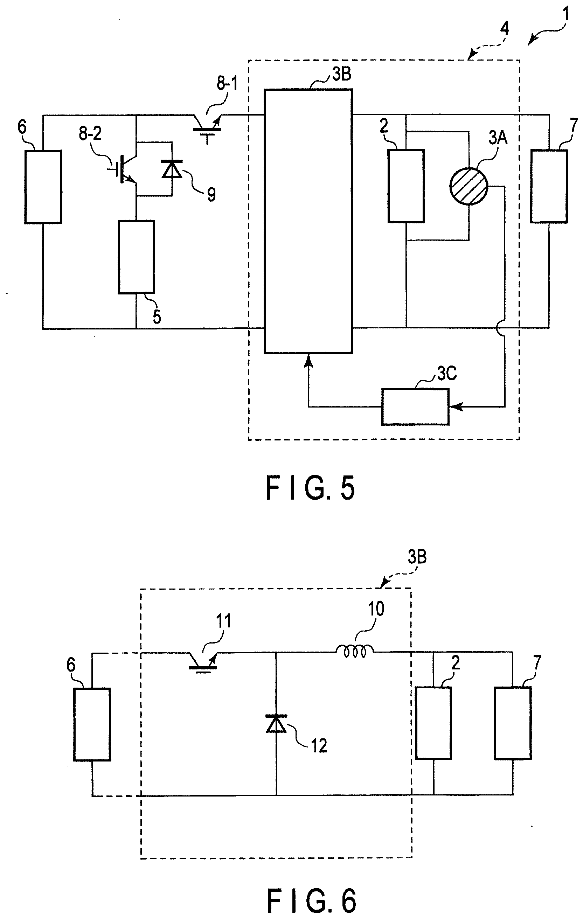

It is preferable that the electricity storage system 1 includes a first switching element between the electricity generation source 6 and the electricity storage unit 4, and a second switching element between the electricity generation source 6 and the secondary battery 5. FIG. 5 illustrates a circuit diagram of the electricity storage system 1 provided with two switching elements. In FIG. 5, numeral 1 denotes the electricity storage system, numeral 2 denotes the electricity storage, numeral 3A denotes the voltage detection circuit, numeral 3B denotes the voltage adjustment circuit, numeral 3C denotes the control circuit, numeral 4 denotes the electricity storage unit, numeral 5 denotes the secondary battery, numeral 6 denotes the electricity generation source, numeral 7 denotes the load, numeral 8-1 denotes a first switching element, numeral 8-2 denotes a second switching element, and numeral 9 denotes a diode (return diode).

In FIG. 5, the first switching element 8-1 is provided between the electricity generation source 6 and the electricity storage 2, and the second switching element 8-2 is provided between the electricity generation source 6 and the secondary battery 5. The timing of charging of the electricity storage 2 and secondary battery 5 can be controlled by providing them with the switching elements (8-1; 8-2), respectively.

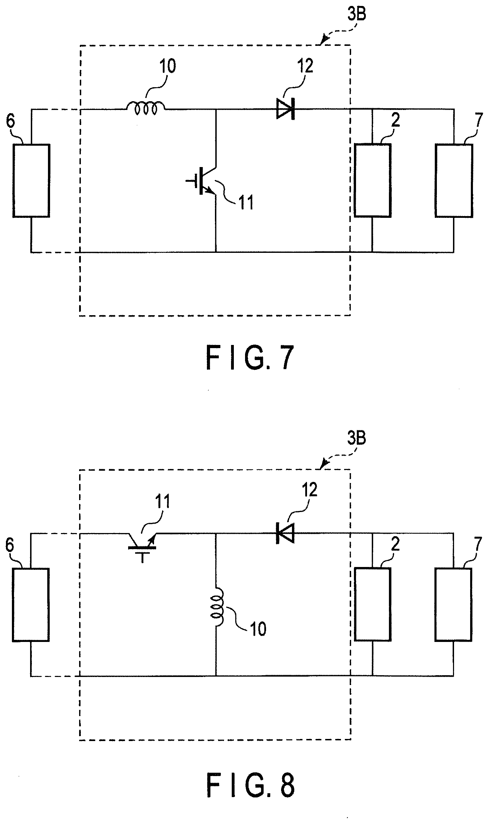

In the electricity storage system 1 shown in FIGS. 1, 4 and 5, etc., the chopper (one of the step-up and step-down chopper, the step-up chopper, and the step-down chopper) incorporated in the voltage adjustment circuit 3B includes a reactor (10 in FIG. 6 or FIG. 8 described later). The reactor is a passive element using an inductor. The reactor of the voltage adjustment circuit 3B functions to block harmonic currents, smooth the direct current (pulse current), and raise or drop the direct voltage.

The electricity storage system 1 shown in FIG. 5 is provided with the diode 9. The diode 9 has a rectifying action of allowing current to flow only in a certain direction. The direction of the current flowing into the electricity storage unit 4, etc., can be adjusted by providing the diode. The diode is not shown in FIGS. 1 and 4, and only one diode 9 is shown in FIG. 5; however, any location which requires a diode shall be provided with a diode as appropriate. In addition, in the electricity storage system 1 shown in FIGS. 1, 4 and 5, the circuit may be provided with additional components as necessary.

FIGS. 6 to 8 show examples of a chopper incorporated in the voltage adjustment circuit 3B. FIG. 6 is a circuit diagram showing a step-down chopper method. The step-down chopper method is a structure that is used when the operating voltage of the load 7 is lower than the voltage of the electricity generation source 6. FIG. 7 is a circuit diagram showing a step-up chopper method. FIG. 8 is a circuit diagram showing a step-up and step-down chopper method. The step-up chopper method is a structure that is used when the operating voltage of the load 7 is higher than the voltage of the electricity generation source 6.

Each unit cell in the electricity storage 2 has an electrode layer (a layer containing an active material) using tungsten oxide. This enables rapid charge and discharge of the electricity storage 2. The rapid charge and discharge means quick charge and quick discharge. In order to take advantage of the speed in rapid charge and discharge, it is effective to perform charging by setting a predetermined duty ratio for each switching element (8; 8-1, 8-2). The duty ratio of each of each switching element (8; 8-1, 8-2) is represented by (Tₒₙ/T) × 100 (%), where T denotes a switching period and Ton denotes an ON-time. The duty ratio of each switching element (8; 8-1, 8-2) is an index showing a ratio of the ON-time Tₒₙ to the switching period T.

By controlling the duty ratio of each switching element (8; 8-1, 8-2), the rapid charge and discharge performance of the electricity storage 2 can be utilized. The amount of current supplied to the electricity storage 2 can be adjusted by adjusting the duty ratio, thereby being able to suppress the occurrence of the overcharged state in the electricity storage 2. Furthermore, the temperature rise of the electricity storage 2 can be suppressed by controlling the charging current to the electricity storage 2, thereby producing an advantage that the life of the electricity storage 2 can be extended. In one embodiment, the duty ratio of each switching element (8; 8-1, 8-2) is controlled by the control circuit 3C. In another embodiment, the duty ratio of each switching element (8; 8-1, 8-2) may be controlled by a control circuit (not shown) separate from the control circuit 3C. In this case, the control circuit that controls the duty ratio of each switching element (8; 8-1, 8-2) includes a processor or an integrated circuit and a storage medium.

In the electricity storage system shown in FIG. 5, it is preferable that the second switching element 8-2 is controlled to be OFF when the first switching element 8-1 is ON, and that the second switching element 8-2 be controlled to be ON when the first switching element 8-1 is OFF. It is preferable that the first switching element 8-1 is adjusted in a manner such that the duty ratio falls within the range of 0% or more and 95% or less. It is preferable that the second switching element 8-2 is adjusted in a manner such that the duty ratio falls within the range of 0% or more and 95% or less. When the duty ratio is 100%, each switching element (8; 8-1, 8-2) becomes completely conductive without having any OFF-state.

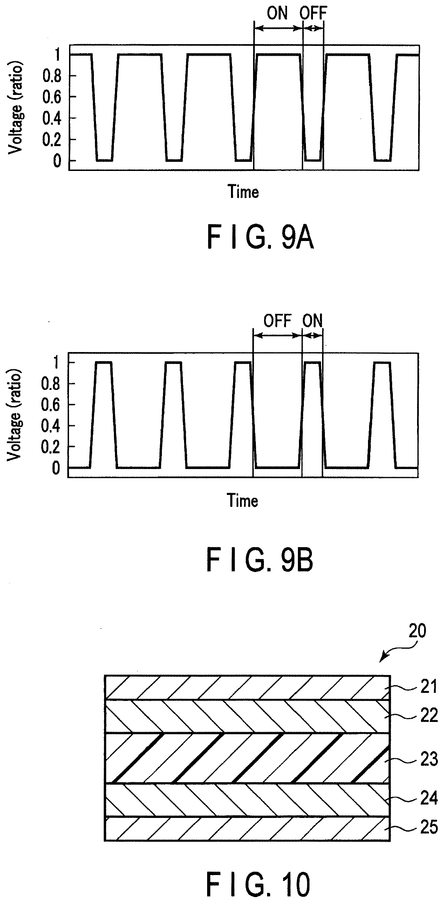

FIGS. 9A and 9B show examples of the duty ratio of the switching elements 8-1 and 8-2. FIG. 9A shows a Gate signal of the first switching element 8-1. FIG. 9B shows a Gate signal of the second switching element 8-2. In each of FIGS. 9A and 9B, the abscissa axis represents time, and the ordinate axis represents voltage. In each of FIGS. 9A and 9B, the ordinate axis is expressed as the ratio with the maximum voltage being equal to 1. As shown in FIGS. 9A and 9B, the first switching element 8-1 and the second switching element 8-2 are controlled so as to alternate ON and OFF.

A charging ratio of the electricity storage 2 with respect to the secondary battery 5 can be changed by changing the duty ratio of the switching elements 8-1 and 8-2. A conduction time of the first switching element 8-1 is shortened by decreasing the duty ratio of the first switching element 8-1. This decreases the amount of current to the electricity storage 2, thereby being able to suppress the overcharged state in the electricity storage 2. This also prolongs a conduction time of the second switching element 8-2, thereby increasing current to the secondary battery 5. Accordingly, the charge amount to the secondary battery 5 is increased.

Conversely, to charge the electricity storage 2 rapidly without causing the overcharged state, the amount of current to the electricity storage 2 is increased by increasing the duty ratio of the first switching element 8-1. At the same time, a conduction time is shortened by decreasing the duty ratio of the second switching element 8-2, so that current to the secondary battery 5 can be decreased.

By providing the first switching element 8-1 and the second switching element 8-2, charging can be switched between the electricity storage 2 and the secondary battery 5. By setting a predetermined duty ratio for each of switching elements 8-1 and 8-2, overcharging of the secondary battery 5 can be prevented while utilizing the rapid charge and discharge performance of the electricity storage 2. Accordingly, extension in life of the entire electricity storage system 1 can also be achieved.

Hereinafter, each chopper incorporated in the voltage adjustment circuit 3B will be described. Each of the step-down chopper shown in FIG. 6, the step-up chopper shown in FIG. 7, and the step-up and step-down chopper shown in FIG. 8 is provided with a reactor 10, a switching element 11, and a diode 12. For the switching element 11, a duty ratio D is defined as in the switching elements (8; 8-1, 8-2). The control circuit 3C adjusts the ratio of the voltage on the load 7 side to the voltage on the electricity generation source 6 side to adjust the voltage of the electricity storage 2 by controlling the duty ratio D of the switching element 11. That is, the ratio of output voltage from the voltage adjustment circuit 3B to input the voltage to the voltage adjustment circuit 3B is adjusted by controlling the duty ratio D of the switching element 11.

With the step-down chopper shown in FIG. 6, when the switching element 11 is ON, current flows in the order of the electricity generation source 6, the switching element 11, the reactor 10, the load 7, and the electricity generation source 6. On the other hand, when the switching element 11 is OFF, current flows in the order of the reactor 10, the load 7, the diode 12, and the reactor 10. Herein, the voltage of the electricity generation source 6, that is, the voltage input to the voltage adjustment circuit 3B is represented by Vₛ. The operating voltage of the load 7, that is, the voltage output from the voltage adjustment circuit 3B is represented by V_{d}. The duty ratio of the switching element 11 is represented by D. In the case of the step-down chopper method shown in FIG. 6, control is performed with V_{d} = DVₛ. Therefore, the ratio of the voltage V_{d} to the voltage Vₛ is decreased by decreasing the duty ratio D, so that the voltage V_{d} is dropped to a great extent with respect to the voltage Vₛ.

With the step-up chopper shown in FIG. 7, when the switching element 11 is ON, current flows in the order of the electricity generation source 6, the reactor 10, the switching element 11, and the electricity generation source 6. On the other hand, when the switching element 11 is OFF, current flows in the order of the electricity generation source 6, the reactor 10, the diode 12, the load 7, and the electricity generation source 6. With the step-up chopper method shown in FIG. 7, control is performed with V_{d} = [1/(1-D)]Vₛ. Therefore, the ratio of the voltage V_{d} to the voltage Vₛ is increased by increasing the duty ratio D, so that the voltage V_{d} is raised to a great extent with respect to the voltage Vₛ.

With the step-up and step-down chopper shown in FIG. 8, when the switching element 11 is ON, current flows in the order of the electricity generation source 6, the switching element 11, the reactor 10, and the electricity generation source 6. On the other hand, when the switching element 11 is OFF, current flows in the order of the reactor 10, the load 7, the diode 12, and the reactor 10. With the step-up and step-down chopper method shown in FIG. 8, control is performed with V_{d} = [D/(1-D)]Vₛ. Therefore, the voltage V_{d} can be raised and dropped with respect to the Vₛ by changing the duty ratio D. If the duty ratio D is more than 50%, the voltage V_{d} is raised with respect to the voltage Vₛ. The ratio of the voltage V_{d} to the voltage Vₛ is increased by increasing the duty ratio D, so that the voltage V_{d} is raised to a great extent with respect to the voltage Vₛ. On the other hand, if the duty ratio D is smaller than 50%, the voltage V_{d} is dropped with respect to the voltage Vₛ. The ratio of the voltage V_{d} is decreased with respect to the voltage Vₛ by decreasing the duty ratio D, so that the voltage V_{d} is dropped to a great extent with respect to the voltage Vₛ.

FIG. 10 shows an example of a cell structure of the electricity storage 2. In FIG. 10, numeral 20 denotes a cell (unit cell) in the electricity storage, numeral 21 denotes a negative electrode-side electrode layer, numeral 22 denotes a negative electrode layer (a layer containing a negative electrode active material), numeral 23 denotes a separator layer, numeral 24 denotes a positive electrode layer (a layer containing a positive electrode active material), and numeral 25 denotes a positive electrode-side electrode layer.

Examples of the negative electrode-side electrode layer 21 and the positive electrode-side electrode layer 25 include metal foils such as aluminum foil. The thickness of metal foil is preferably 10 µm or more and 30 µm or less. The negative electrode layer (the layer containing a negative electrode active material) 22 contains the aforementioned tungsten oxide (WO₃₋ₓ).

Examples of the separator layer 23 include a porous film such as a polyethylene porous film. The thickness of the separator layer is preferably 10 µm or more and 30 µm or less. Examples of the electrolyte solution include a solution obtained by dissolving LiPF₆ as an electrolyte in EC/DEC solution. EC is an abbreviation for ethylene carbonate. DEC is an abbreviation for diethyl carbonate. Examples of the positive electrode layer 24 include a lithium composite oxide such as LiCoO₃.

The electricity storage system (hybrid electricity storage system) 1 configured as described above can adopt, as the electricity generation source 6, any of a commercial power source, a generator of regenerative energy, and a generator that generates electric power using renewable energy. The electricity storage system 1 is applicable to various structures such as a stationary type and a unit type. The electricity generation source 6, the electricity storage unit 4, and the secondary battery 5 may be integrated together or may be separate from each other.

The electricity storage unit 4 and the electricity storage system 1 described above are applicable to various fields such as home appliances, electric devices, automobiles, elevators, solar cells, and wind power generation.

### (Examples)

Hereinafter, the verification related to the embodiment described above and the verification results are described.

### (Examples 1 to 9 and Comparative Examples 1 to 4)

Tungsten oxide (WO₃₋ₓ) powder of each of Samples 1 to 4 shown in Table 1 was prepared as an electrode material (active material). Oxygen deficiency was generated by heat-treating WO₃ powder in a nitrogen atmosphere. In this way, the x-value was adjusted.

The amount of oxygen deficiency was measured using a KMnO₄ solution, and the amount of KMnO₄ required to oxidize all the low-electrified W ions (W⁴⁺, W5⁺) to W⁶⁺ is quantified by chemical analysis. The amount of KMnO₄ quantified by this analysis was replaced with WO₃₋ₓ to obtain the x-value.

**Table 1**

| | Particle diameter (µm) | WO₃₋ₓ | Crystal structure |
|---|---|---|---|
| Sample 1 | 0.1 | WO_{2.72}, x=0.28 | Monoclini crystal |
| Sample 2 | 0.03 | WO_{2.83}, x=0.17 | Monoclini crystal |
| Sample 3 | 0.03 | WO₃, x=0 | Monoclini crystal |
| Sample 4 | 0.07 | WO_{2.99}, x=0.01 | Cubic crystal |

Next, the negative electrode layer (the layer containing a negative electrode active material) was formed using the tungsten oxide (WO₃₋ₓ) of each of Samples 1 to 4. For the formation of the negative electrode layer, a paste was prepared by mixing the sample (tungsten oxide), acetylene black as a conductive additive, and polyvinylidene fluoride (PVDF) as a binder. The mixing ratio (mass ratio) of the tungsten oxide powder and the acetylene black was set as Tungsten oxide powder : acetylene black = 100 : 10. The coating weight of the negative electrode material in which the tungsten oxide powder and acetylene black were combined was adjusted to be 3 mg/cm². The negative electrode layer was formed in a manner to have a film thickness of 10 µm and a porosity of 30% after drying and pressing. The coating weight of the positive electrode material was set to the amount having a sufficient margin with respect to the electric capacity of the negative electrode material.

The negative electrode layer was prepared by applying the paste adjusted as described above on the negative electrode-side electrode layer and drying the applied paste. Next, the paste was prepared using LiCoO₂ powder as a positive electrode material (a positive electrode active material) in a similar manner to the negative electrode. The positive electrode layer (the layer containing a positive electrode active material) was prepared by applying the prepared paste on the positive electrode-side electrode layer and drying the applied paste. In each of the negative electrode layer and the positive electrode layer, the electrode area was set to 2 cm². Each of the negative electrode-side electrode layer and the positive electrode-side electrode layer was aluminum foil with a thickness of 15 µm.

As the separator layer, a polyethylene porous film (film thickness of 20 µm) was used. The laminated body of the electrodes (the negative electrode layer, the negative electrode-side electrode layer, the positive electrode layer, and the positive electrode-side electrode layer) and the separator layer was put in a cell container made from aluminum, and the electrolyte solution was impregnated therein. Thereafter, the cell container was degassed and sealed to prepare a cell for the electrical storage. As the electrolyte, a solution in which LiPF₆ was dissolved as an electrolyte in an EC/DEC solution was used. The EC/DEC solution is a solution obtained by mixing ethylenecarbonate (EC) and diethylcarbonate (DEC).

The electricity storage unit was prepared by providing the voltage detection circuit, the voltage adjustment circuit, and the control circuit described above, in addition to the electricity storage. In the prepared electricity storage unit, the energy density per cell in the electricity storage was set to 100 Wh/kg or more, and the power density per cell in the electricity storage was set to 5,000 W/kg or more.

In the verification, the electricity storage unit according to each of Examples 1 to 9 and Comparative Examples 1 to 4 shown in Table 2 was examined in terms of durability of the electricity storage. In Table 2, an electric potential difference (V) indicates the ranges of electric potential difference per cell in the electricity storage controlled by the control circuit. In table 2, "no control" indicates that the electric potential difference of the electricity storage is not controlled by the control circuit, etc. In the verification of durability, the initial capacity and the capacity after 3,000 cycles of charge and discharge were measured with respect to the electricity storage. Thereafter, the capacity retention ratio, which is a ratio of the capacity after 3,000 cycles to the initial capacity, was calculated. The capacity retention ratio was calculated by (capacity after 3,000 cycles/initial capacity) × 100 (%) = capacity retention ratio (%). Table 2 shows the calculation results of the capacity retention rate.

**Table 2**

| | Electrode material | Electric potential difference (V) | Capacity retention tatio after 3,000 cycles (%) |
|---|---|---|---|
| Example 1 | Sample 1 | 1.5 or more and 2.8 or less | 90 |
| Example 2 | Sample 1 | 2.0 or more and 2.5 or less | 95 |
| Comparative example 1 | Sample 1 | No control | 70 |
| Example 3 | Sample 2 | 1.5 or more and 2.8 or less | 88 |
| Example 4 | Sample 2 | 2.0 or more and 2.5 or less | 90 |
| Comparative example 2 | Sample 2 | No control | 60 |
| Example 5 | Sample 3 | 1.5 or more and 2.8 or less | 80 |
| Example 6 | Sample 3 | 2.0 or more and 2.5 or less | 89 |
| Comparative example 3 | Sample 3 | No control | 58 |
| Example 7 | Sample 4 | 1.5 or more and 2.8 or less | 80 |
| Example 8 | Sample 4 | 2.0 or more and 2.5 or less | 84 |
| Comparative example 4 | Sample 4 | No control | 52 |
| Example 9 | Sample 1 | 1.5 or more and 2.5 or less | 93 |

As shown in Table 2, the capacity retention ratio of the electricity storage was improved by controlling an electric potential difference between the positive electrode and the negative electrode per cell in the electricity storage to be within the range of 1.5 V or more and 2.8 V or less. The capacity retention ratio of the electricity storage was further improved by controlling an electric potential difference per cell to be within the range of 2.0 V or more and 2.5 V or less. By controlling an electric potential difference to be within the ranges described above, tungsten oxide can maintain a type of its crystal structure as the main crystal from the initial state without having any crystal-structure change. This realizes efficient take-in and take-out of Li ions, thereby improving the capacity retention ratio of the electricity storage.

On the other hand, in the comparative examples (with no control), an electric potential difference in the electricity storage is not controlled. In this case, the minimum value of an electric potential difference per cell is 0 V. The maximum value of an electric potential difference per cell is a value obtained by dividing the maximum output voltage of the electricity generation source by the number of series-connected cells in the electricity storage.

### (Examples 10 to 18 and Comparative Example 5)

Next, the aforementioned electricity storage system (hybrid electricity storage system) was prepared using the electricity storage unit according to each of Examples 1 and 2 and Comparative Example 1, and the secondary battery.

As the secondary battery, a Li-ion battery (energy density of 70 Wh/kg per cell, power density of 900 W/kg per cell) was prepared. As the electricity generation source, a commercial power source was used. IGBT was prepared as a switching element that distributes electricity between the electrical storage (electrical storage unit) and the secondary battery. The step-up and step-down chopper was incorporated in the voltage adjustment circuit (electric potential difference adjustment circuit) of the electricity storage unit.

For the verification, the electricity storage systems according to Examples 10 to 18 and Comparative Example 5 shown in Table 3 were used. In Table 3, "electricity storage unit" shows which one of the electricity storage units according to Examples 1 and 2 and Comparative Example 1 described above was used. In Table 3, "one switching element" indicates the structure in which electricity from the electricity generation source is distributed between the electricity storage and the secondary battery as shown in FIG. 4. "Two switching elements" indicate the structure in which each of the electricity storage and the secondary battery is turned on and off with electricity from the electricity generation source, as in FIG. 5.

**Table 3**

| Electricity storage system | Electricity storage unit | Presence or absence of switching element | Duty ratio of switching element (%) | |
|---|---|---|---|---|
| | | | First switching element | Second switching element |
| Example 10 | Example 1 | None | - | - |
| Example 11 | Example 1 | One switching element | 70 | - |
| Example 12 | Example 1 | Two switching elements | 50 | 50 |
| Example 13 | Example 1 | Two switching elements | 80 | 20 |
| Example 14 | Example 2 | None | - | - |
| Example 15 | Example 2 | One switching element | 80 | - |
| Example 16 | Example 2 | Two switching elements | 60 | 40 |
| Example 17 | Example 1 | One switching element | 75 | - |
| Example 18 | Example 1 | Two switching elements | 40 | 60 |
| Comparative example 5 | Comparative example 1 | None | - | - |

In the verification, the calorific value was measured with respect to the electricity storage system according to each of Examples 10 to 18 and Comparative Example 5. For the measurement of the calorific value, the electricity storage system was operated continuously for 20 hours, and the temperature (°C) of the electricity storage and the secondary battery was measured. The measurement results of the temperature are shown in Table 4.

**Table 4**

| | Temperature (°C) of electricity storage (after 20 hours) | Temperature (°C) of secondary battery (after 20 hours) |
|---|---|---|
| Example 10 | 45 | 47 |
| Example 11 | 40 | 48 |
| Example 12 | 32 | 35 |
| Example 13 | 30 | 32 |
| Example 14 | 43 | 48 |
| Example 15 | 38 | 40 |
| Example 16 | 31 | 34 |
| Example 17 | 49 | 51 |
| Example 18 | 49 | 49 |
| Comparative example 5 | 52 | 55 |

As shown in Table 4, the characteristics of the electricity storage system were improved by providing a switching element for distributing electricity between the electricity storage and the secondary battery. The characteristics of the electricity storage system were further improved by providing two switching elements. When the switching elements were provided, the performance of the electricity storage system was further improved by optimizing the duty ratio of each of the switching elements. Overcharging of the electricity storage and the secondary battery is suppressed by controlling the duty ratio of each of the switching elements to be an optimal value. This improves the performance of the electricity storage system (hybrid electricity storage system), thereby realizing prolonged life of the electricity storage system.

Hereinafter, the characteristic matters of the aforementioned embodiment, etc., will be additionally described.

### (Feature 1)

An electricity storage system comprising:
an electricity storage that uses tungsten oxide in a negative electrode layer or a positive electrode layer; and
a control circuit that sets an electric potential difference between the negative electrode and the positive electrode at a time of charge and discharge of the electricity storage to 1.5 V to 2.8 V.

### (Feature 2)

The electricity storage system according to feature 1, wherein the tungsten oxide mainly has a cubic crystal structure.

### (Feature 3)

The electricity storage system according to feature 1 or 2, wherein tungsten oxide that constitutes the negative electrode layer or the positive electrode layer includes WO₃₋ₓ, in which x ≥ 0.

### (Feature 4)

The electricity storage system according to any one of features 1 to 3, wherein the electricity storage has an energy density of 10 Wh/kg or more and a power density of 1,000 W/kg or more.

### (Feature 5)

A hybrid electricity storage system comprising the electricity storage system according to any one of features 1 to 4 and a secondary battery.

### (Feature 6)

A hybrid electricity storage system comprising the electricity storage system according to any one of features 1 to 4, a secondary battery, and an electricity generation source.

### (Feature 7)

A hybrid electricity storage system according to feature 6, comprising a switching element that distributes electricity from an electricity generation source to the electricity storage system or the secondary battery.

### (Feature 8)

The hybrid electricity storage system according to feature 6, wherein:
a first switching element is provided between the electricity generation source and the electricity storage system; and
a second switching element is provided between the electricity generation source and the secondary battery.

### (Feature 9)

The hybrid electricity storage system according to feature 8, wherein the second switching element is controllable to be OFF when the first switching element is ON, and the second switching element is controllable to be ON when the first switching element is OFF.

### (Feature 10)

The hybrid electricity storage system according to feature 8 or 9, wherein the first switching element has a duty ratio of 0% to 95% and the second switching element has a duty ratio of 0% to 95%.

### (Feature 11)

The hybrid electricity storage system according to any one of features 7 to 10, wherein the electricity generation source is any one of a commercial power source, regenerative energy, and renewable energy.

While certain embodiments have been described as examples, these embodiments have been presented by way of example only, and are not intended to limit the scope of the inventions. The novel embodiments described herein may be embodied in a variety of other forms; furthermore, various omissions, substitutions and changes in the form of the embodiments described herein may be made without departing from the spirit. The accompanying claims and their equivalents are intended to cover such forms or modifications as would fall within the scope and spirit. In addition, the embodiments described above can be implemented in combination with each other.

## Claims

1. An electricity storage unit, comprising:
an electricity storage that uses tungsten oxide for a negative electrode layer or a positive electrode layer, a main crystal of the tungsten oxide being at least one of monoclinic crystal, orthorhombic crystal, and cubic crystal; and
a control circuit that controls, in charge and discharge of the electricity storage, an electric potential difference per cell in the electricity storage in a manner such that a type of a crystal structure as the main crystal of the tungsten oxide is maintained from an initial state.

2. The electricity storage unit according to claim 1, wherein:
the tungsten oxide of the electricity storage has the monoclinic crystal as the main crystal in the initial state; and
the control circuit controls, in the charge and discharge of the electricity storage, the electric potential difference per cell in a manner such that the monoclinic crystal is maintained as the main crystal of the tungsten oxide.

3. The electricity storage unit according to claim 2, wherein the control circuit controls the electric potential difference per cell to be within a range of 1.5 V or more and 2.8 V or less in charge and discharge of the electricity storage with a state of charge within a range of 0% and more and 100% or less.

4. The electricity storage unit according to any one of claims 1 to 3, wherein the tungsten oxide that is used for the negative layer or the positive layer in the electricity storage includes WO₃₋ₓ, in which x satisfies x ≥ 0.

5. The electricity storage unit according to any one of claims 1 to 4, wherein the electricity storage has an energy density of 10 Wh/kg or more per cell and a power density of 1,000 W/kg or more per cell.

6. An electricity storage system comprising:
the electricity storage unit according to any one of claims 1 to 5; and
a secondary battery.

7. The electricity storage system according to claim 6, further comprising an electricity generation source.

8. The electricity storage system according to claim 7, further comprising a switching element that distributes electricity from the electricity generation source to the electricity storage unit or the secondary battery.

9. The electricity storage system further comprising:
a first switching element provided between the electricity generation source and the electricity storage unit; and
the second switching element provided between the electricity generation source and the secondary battery.

10. The electricity storage system according to claim 9, wherein:
the second switching element is controlled to be OFF when the first switching element is ON; and
the second switching element is controlled to be ON when the first switching element is OFF.

11. The electricity storage system according to claim 9 or 10, wherein:
the first switching element is adjusted in a manner such that a duty ratio falls within a range of 0% or more and 95% or less; and
the second switching element is adjusted in a manner such that a duty ratio falls within a range of 0% or more and 95% or less.

12. The electricity storage system according to any one of claims 7 to 11, wherein the electricity generation source is any one of a commercial power source, a generator of regenerative energy, and a generator that generates electricity using renewable energy.
